# EUROPÄISCHE PATENTSCHRIFT

(11) **EP 3 385 574 B1**
(45) Veröffentlichungstag und Bekanntmachung des Hinweises auf die Patenterteilung: **16.10.2019**
(21) Anmeldenummer: 18160445.5
(22) Anmeldetag: 07.03.2018
(51) Int. Cl.: F16H 61/444, F16H 61/448

(54) **HYDRAULISCHER ANTRIEB FÜR DIE VORSCHUBWALZEN EINES KOPFES EINES HOLZVOLLERNTERS**
HYDRAULIC DRIVE FOR THE CONVEYOR ROLLERS OF A HEAD OF A WOOD HARVESTER
ENTRAÎNEMENT HYDRAULIQUE POUR ROULEAUX D'AVANCEMENT D'UNE TÊTE D'UNE ABATTEUSE

(30) Priorität: 06.04.2017 DE 102017205846
(43) Veröffentlichungstag der Anmeldung: 10.10.2018
(73) Patentinhaber: Robert Bosch GmbH, 70442 Stuttgart (DE)
(72) Erfinder: Edward, Iain, North Queensferry, Fife KYIIIEDC (GB)
(74) Vertreter: Maiß, Harald

(56) Entgegenhaltungen:
- DE-A1-102008 000 093
- DE-B3- 10 248 028

## Beschreibung

Die Erfindung betrifft einen Antrieb für die Vorschubwalzen eines Kopfes eines Holzvollernters, der auch als Harvesterkopf bezeichnet wird, gemäß dem Oberbegriff des Patentanspruchs 1.

Die Druckschrift DE 102 48 028 B3 offenbart einen hydrostatischen Fahrantrieb z.B. für eine Straßenwalze, bei der der Vorderachsantrieb und der Hinterachsantrieb jeweils eine Parallelschaltung von zwei Hydromotoren aufweist. In jeder Parallelschaltung kann einer der beiden Hydromotoren durch einen hydrostatischen Kurzschluss deaktiviert werden.

Ein Holzvollernter ist eine mobile Arbeitsmaschine, die sich z.B. in einem Wald selbstständig zwischen zu erntenden Bäumen bewegen kann, und mittels seines multidirektional beweglichen Kopfes einen betroffenen Baumstamm umfassen, absägen, von Ästen befreien und zerteilen kann. Insbesondere bei den beiden letzten Arbeitsschritten wird der Baumstamm über Vorschubwalzen des Kopfes, die gegen den Baumstamm gespannt werden, relativ zum Kopf hin- und herbewegt. Die Vorschubwalzen werden meistens mit hydrostatischen Motoren angetrieben.

Die Druckschrift DE 10 2008 000 093 A1 offenbart ein hydrostatisches Antriebssystem für einen Kopf einer derartigen Forsterntemaschine. Es sind zwei Kombinationen aus zwei parallel geschalteten Hydromotoren vorgesehen. Der jeweilige zweite Hydromotor kann durch hydraulischen Kurzschluss deaktiviert werden.

In den Druckschriften US 7,644,580 B2 und DE 10 2006 052 050 A1 ist jeweils ein Antrieb für die Vorschubwalzen eines Kopfes eines Holzvollernters gezeigt, bei dem ein hydrostatischer Radialkolbenmotor ein festes Schluckvolumen hat, während ein weiterer hydrostatischer Radialkolbenmotor ein in zwei Stufen schaltbares Schluckvolumen hat und somit in zwei Gängen betreibbar ist. Durch die Hintereinanderschaltung der beiden Radialkolbenmotoren wird auch der Radialkolbenmotor mit dem festen Schluckvolumen je nach Schaltung des anderen Radialkolbenmotors mit unterschiedlichen Volumenströmen versorgt, so dass die beiden Radialkolbenmotoren stets synchron und in zwei Vorschubgeschwindigkeiten betrieben werden können.

Zum Umschalten hat der weitere Radialkolbenmotor zwei Halbmotoren, von denen der eine Halbmotor dadurch deaktiviert werden kann, dass sein Eingang mit seinem Ausgang verbunden wird. Damit entsteht ein für die betroffene Vorschubwalze im Wesentlichen wirkungsloser Druckmittel-Umlauf im zweiten Halbmotor.

Da der Antrieb die Vorschubwalzen bidirektional antreiben kann, um den betroffenen Baumstamm in beide Richtungen bewegen zu können, erfolgt der Druckmittel-Umlauf in dem betroffenen Halbmotor bei einer ersten Drehrichtung unter Hochdruck und bei einer zweiten Drehrichtung unter Niederdruck. Der Umlauf unter Hochdruck hat den Nachteil der unvermeidbaren Verlustleistung (Reibung), und der Druckmittel-Umlauf unter Niederdruck hat den Nachteil, dass die Rollen der betroffenen Kolben von den fallenden Flanken der Nocken beziehungsweise Wellenbergen des Hubrings des Radialkolbenmotors abheben können und gegen die steigende Flanke der nächsten Nocke schlagen können.

Dem gegenüber liegt der Erfindung die Aufgabe zu Grunde, einen hydraulischen Antrieb für die Vorschubwalzen eines Kopfes eines Holzvollernters zu schaffen, bei dem die genannten Nachteile bei Auswahl der schnelleren Vorschubgeschwindigkeit und dem dann erfolgenden Druckmittel-Umlauf vermieden sind.

Diese Aufgabe wird gelöst durch einen Antrieb mit den Merkmalen des Patentanspruchs 1.

Der beanspruchte hydraulische Antrieb ist mit Vorschubwalzen eines Kopfes eines Holzvollernters gekoppelt, der auch als Harvesterkopf bezeichnet werden kann. Der Antrieb hat einen ersten Radialkolbenmotor, der als Twinmotor ausgestaltet ist. Dieser weist zwei Anschlüsse auf, die mit einer ersten Gruppe von Nocken, die auch als Wellenberge bezeichnet werden können, in Wirkverbindung sind, und er weist zwei weitere Anschlüsse auf, die mit einer zweiten Gruppe von Nocken in Wirkverbindung sind. Zylinder-Kolben-Kombinationen des Twinmotors, die über die Nocken einer der Gruppen laufen, werden abwechselnd mit deren beiden Anschlüssen verbunden, also bei jeder Nocke einmal mit dem einen Anschluss und einmal mit dem anderen Anschluss der Gruppe. Der beanspruchte Antrieb weist weiterhin einen zweiten Radialkolbenmotor auf. Die zweite Gruppe von Nocken des ersten Radialkolbenmotors ist dadurch deaktivierbar, dass ihre Anschlüsse miteinander und erfindungsgemäß gleichzeitig mit einer Steuerdruckleitung oder einem Steuerdruckanschluss des ersten Radialkolbenmotors verbunden werden. In diesem Fall ist ein Druckmittel-Umlauf der Zylinder-Kolben-Kombinationen, die in Wirkverbindung mit der zweiten Gruppe sind, realisiert, der erfindungsgemäß mit Steuerdruck erfolgt, der größer als ein Niederdruck und kleiner als ein Hochdruck des Antriebs ist. Damit werden die Kolben mit dem Steuerdruck beaufschlagt und verlustarm an den Nocken gehalten, und heben auch bei höheren Drehzahlen beziehungsweise Umlaufgeschwindigkeiten nicht von diesen ab. Der Steuerdruck kann z.B. 20 bis 30 bar betragen.

Der erfindungsgemäße Antrieb ist bidirektional, um den betroffenen Baumstamm in beide Richtungen durch den Kopf bewegen zu können, wobei bei einer ersten Drehrichtung der Vorschubwalzen der zweite Radialkolbenmotor stromab der ersten Gruppe des ersten Radialkolbenmotos angeordnet ist, und wobei bei einer zweiten Drehrichtung der Vorschubwalzen der zweite Radialkolbenmotor stromauf der ersten Gruppe des ersten Radialkolbenmotos angeordnet ist. Damit werden die Kolben, die in Wirkverbindung mit der zweiten Gruppe sind, in beiden Drehrichtungen der Vorschubwalzen bei der schnelleren Drehgeschwindigkeit mit dem Steuerdruck beaufschlagt und verlustarm an den Nocken gehalten, und heben nicht von diesen ab.

Wenn die zweite Gruppe aktiviert ist, wird eine erste Hälfte des gesamten Volumenstroms eines Hauptanschlusses des Antriebs über die Zylinder-Kolben-Kombinationen, die mit der ersten Gruppe in Wirkverbindung sind, und je nach Drehrichtung danach oder davor auch über den zweiten Radialkolbenmotor geführt. Dabei wird eine zweite Hälfte des gesamten Volumenstroms über die Zylinder-Kolben-Kombinationen, die in Wirkverbindung mit der zweiten Gruppe sind, und an dem zweiten Radialkolbenmotor vorbei geführt. Damit ergibt sich die langsamere Drehgeschwindigkeit der Vorschubwalzen des Antriebs. Wenn die zweite Gruppe deaktiviert ist, wird der gesamte Volumenstrom des Hauptanschlusses des Antriebs nur über die Zylinder-Kolben-Kombinationen, die mit der ersten

Gruppe in Wirkverbindung sind, und je nach Drehrichtung danach oder davor auch über den zweiten Radialkolbenmotor geführt. Damit ergibt sich die schnellere Drehgeschwindigkeit.

Weitere vorteilhafte Ausgestaltungen der Erfindung sind in den abhängigen Patentansprüchen beschrieben.

Bei einem kompakt bauenden ersten Radialkolbenmotor sind die Nocken der beiden Gruppen auf einem gemeinsamen Hubring verteilt. Alternativ können die Nocken jeder Gruppe an einem jeweiligen Hubring ausgebildet sein, die zueinander axial beabstandet sind. Der oder die Hubringe ruhen vorzugsweise, während ein Zylinderblock mit darin gebildeten Zylindern und darin geführten Kolben rotiert.

Besonders bevorzugt wird ein Gangwahlventil, wobei in einer ersten Stellung seines Ventilschiebers die zweite Gruppe aktiviert ist, in dem jeder ihrer Anschlüsse mit einem jeweiligen Hauptanschluss des Antriebs verbunden ist. In einer zweiten Stellung des Ventilschiebers ist die zweite Gruppe deaktiviert, in dem die beiden Anschlüsse der zweiten Gruppe miteinander und mit der Steuerdruckleitung oder dem Steuerdruckanschluss des ersten Radialkolbenmotors verbunden sind.

Bei eine bevorzugten Ausgestaltung ist das Gangwahlventil ein 5/2-Wegeventil, dessen Ventilschieber durch eine Feder in die erste Stellung vorgespannt ist, und der mittels eines Steuerdrucks in der Steuerdruckleitung oder am Steuerdruckanschluss des ersten Radialkolbenmotors in die zweite Stellung bewegbar ist.

Zu Betätigung des Gangwahlventils mittels Steuerdruckmittel und zur Beaufschlagung des Druckmittel-Umlaufs mit Steuerdruckmittel wird es bevorzugt, wenn die Steuerdruckleitung oder der Steuerdruckanschluss über eine Steuerdruck-Zweigleitung mit einem gegen die Feder wirkenden Steuerdruckraum des Gangwahlventils verbunden ist, und wenn die Steuerdruckleitung oder der Steuerdruckanschluss über eine weitere Steuerdruck-Zweigleitung mit einem Steuerdruckanschluss des Gangwahlventils verbindbar ist. Der Steuerdruckanschluss des Gangwahlventils ist in der zweiten Stellung des Ventilschiebers mit den beiden Anschlüssen der zweiten Gruppe verbunden.

Um ein sanftes Umschalten zwischen den Drehgeschwindigkeiten des erfindungsgemäßen Antriebs zu ermöglichen, ist eine elektroproportionale Steuerung oder ein in der zweiten Steuerdruck-Zweigleitung angeordnetes Absperrventil geeignet, das auch als Steuerventil bezeichnet werden kann.

Das Absperrventil sperrt vorzugsweise in einer durch eine Feder vorgespannten Stellung seines Ventilkörpers den Steuerdruckanschluss des Gangwahlventils gegen die Steuerdruckleitung oder den Steuerdruckanschluss des ersten Radialkolbenmotors ab, und verbindet in einer durch den Steuerdruck erzeugbaren Stellung den Steuerdruckanschluss des Gangwahlventils mit der Steuerdruckleitung oder dem Steuerdruckanschluss des ersten Radialkolbenmotors.

Damit kann ein Wechsel der Drehgeschwindigkeit des Antriebs sanft erfolgen kann, wird es bevorzugt, wenn der Ventilschieber des Gangwahlventils stetig verstellbar ist.

Der erste Radialkolbenmotor hat vorzugsweise einen Rotor, an dessen Außenumfang ein ruhendes Gehäuse vorgesehen ist. An dem Rotor ist der Zylinderblock gebildet oder drehfest gekoppelt. Der erste Hauptanschluss des Antriebs und die beiden Anschlüsse der zweiten Gruppe sind mit einem jeweiligen zwischen dem Rotor und dem Gehäuse gebildeten umlaufenden ringförmigen Druckraum verbunden. der Rotor und das Gehäuse bilden einen Verteiler. Weiterhin kann ein Anschluss der ersten Gruppe, der mit dem zweiten Radialkolbenmotor direkt verbunden ist, mit einem weiteren zwischen dem Rotor und dem Gehäuse gebildeten umlaufenden ringförmigen Druckraum verbunden sein.

Vorzugsweise ist das Gangwahlventil Bauraum sparend in das Gehäuse des ersten Radialkolbenmotors integriert. Damit Kanäle möglichst kurz gestaltet werden können, kann das Gangwahlventil am Außenumfang der umlaufenden Druckräume angeordnet werden.

in der ersten Stellung des Ventilschiebers des Gangwahlventils ist der umlaufende Druckraum des ersten Hauptanschlusses des Antriebs über einen im Gehäuse gebildeten inneren radialen Kanal und über einen ersten Hals des Ventilschiebers und über einen im Gehäuse gebildeten weiteren inneren radialen Kanal mit dem umlaufenden Druckraum des ersten Anschlusses der zweiten Gruppe verbunden. Gleichzeitig ist der zweite Hauptanschluss des Antriebs mit zumindest einem im Gehäuse gebildeten äußeren radialen Kanal verbunden, der in der ersten Stellung des Ventilschiebers über einen zweiten Hals des Ventilschiebers und über einen im Gehäuse gebildeten weiteren inneren radialen Kanal mit dem umlaufenden Druckraum des zweiten Anschlusses der zweiten Gruppe verbunden ist. Damit ist die langsamere Drehgeschwindigkeit der Radialkolbenmotoren gewählt.

In der zweiten Stellung des Ventilschiebers des Gangwahlventils sind die umlaufenden Druckräume der beiden Anschlüsse der zweiten Gruppe über den zweiten Hals miteinander verbunden. Damit ist die schnellere Drehgeschwindigkeit der Radialkolbenmotoren gewählt.

Zur erfindungsgemäßen Verbindung des Druckmittel-Umlaufs mit dem Steuerdruck ist bei der vorbeschriebenen Ausgestaltung des Gangwahlventils im Bereich des zweiten Halses zumindest eine Radialbohrung vorgesehen, über die der stirnseitige Steuerdruckraum mit dem zweiten Hals verbindbar ist.

Damit die erfindungsgemäße Druckmittel-Umlauf unter Steuerdruck ermöglicht wird, wenn der Steuerdruck den Ventilschieber in die zweite Stellung verschoben hat, ist die Radialbohrung über einen im Innern des Ventilschiebers aufgenommenen Schieber aufgesteuert, wenn in dem Steuerdruckraum Steuerdruck herrscht. Damit der Steuerdruck nicht von eventuellem am zweiten Hals anliegendem Hochdruck durch die Radialbohrung aufgebaut wird, ist diese über den Schieber zugesteuert, wenn in dem Steuerdruckraum ein Druck herrscht, der geringer als der Steuerdruck ist.

Ein Ausführungsbeispiel eines erfindungsgemäßen Antriebs für die Vorschubwalzen eines Kopfes eines Holzvollernters ist in den Zeichnungen dargestellt. Anhand der Figuren dieser Zeichnungen wird die Erfindung nun näher erläutert.

Es zeigen
Figur 1 einen Schaltplan eines erfindungsgemäßen Antriebs für die Vorschubwalzen eines Kopfes eines Holzvollernters gemäß dem Ausführungsbeispiel, und
Figur 2 in einem Längsschnitt einen Ausschnitt des ersten Radialkolbenmotors des Antriebs aus Figur 1.

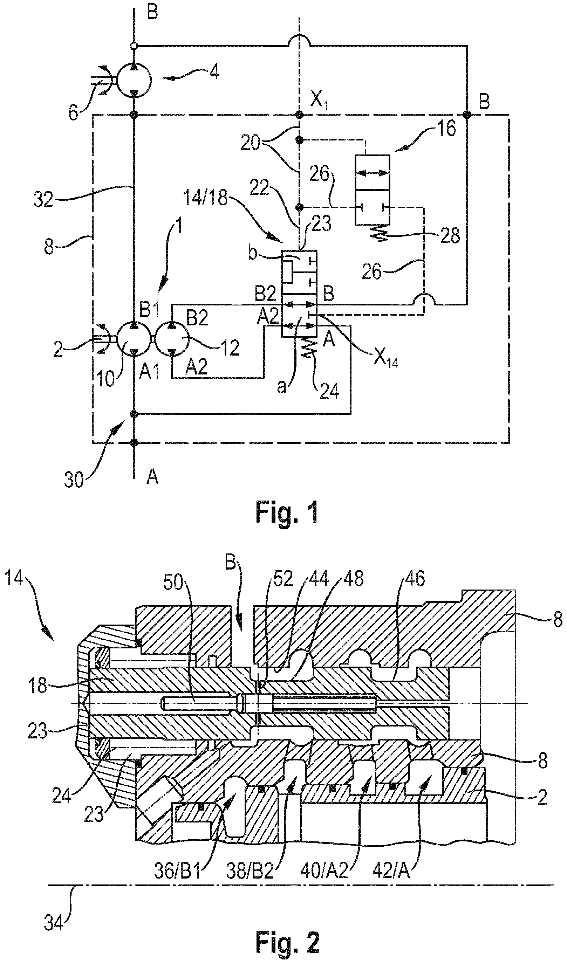

Figur 1 zeigt einen Schaltplan eines erfindungsgemäßen Antriebs für die Vorschubwalzen eines Kopfes eines Holzvollernters gemäß dem Ausführungsbeispiel. Der Antrieb hat einen ersten Radialkolbenmotor 1, an dessen Abtriebswelle 2 zumindest eine (nicht gezeigte) Vorschubwalze des Kopfes drehfest gekoppelt ist. Der Antrieb hat weiterhin einen zweiten Radialkolbenmotor 4, an dessen Abtriebswelle 6 ebenfalls zumindest eine (nicht gezeigte) Vorschubwalze vorgesehen ist. Über diese Vorschubwalzen wird ein Baumstamm in den Kopf eingespannt, so dass er abgesägt, entastet und zerteilt werden kann. Über dies Vorschubwalzen wird der Baumstamm bei den beiden zuletzt genannten Funktionen auch durch den Kopf hin- und herbewegt.

Der Antrieb hat einen ersten Hauptanschluss A und einen zweiten Hauptanschluss B, die - je nach gewünschter Vorschubrichtung des Baumstamms - beide als Hochdruck- und als Niederdruckanschluss eingesetzt werden können.

Der erste Radialkolbenmotor 1 hat ein Gehäuse 8, in dem ein oder zwei ruhende (nicht gezeigte) Hubringe angeordnet sind, auf die zwei Gruppen 10, 12 von Nocken verteilt sind, wobei in jeder Gruppe 10, 12 gleichviele Nocken vorgesehen sind. Diese können abwechselnd an dem einen Hubring verteilt sein, oder jeder der beiden Hubringe weist die Nocken einer Gruppe 10, 12 auf.

Der erste Radialkolbenmotor 1 hat weiterhin einen drehfest an die Abtriebswelle 2 gekoppelten Zylinderblock, an dessen Umfang mehrere Zylinder verteilt sind, in denen jeweils ein Kolben geführt ist, der sich über eine jeweilige Rolle an den Nocken abstützt. Jede Nocke hat zwei gegensinnig zueinander geneigte Flanken, so dass jede Nocke einen Wellenberg bildet. Je nach gewünschter Drehrichtung der Abtriebswelle 2 ist eine der Flanken eine Arbeitsflanke, während die andere Flanke eine Rückführflanke ist. Bei einer ersten Drehrichtung des ersten Radialkolbenmotors 1 sind Mündungskanäle, deren Verteilung am Umfang des ruhenden Gehäuses (Stators) 8 der Verteilung der Arbeitsflanken der ersten Gruppe 10 entspricht, mit einem Anschluss A1 der ersten Gruppe 10 verbunden, während Mündungsbohrungen, deren Verteilung derjenigen der Rückführflanken der ersten Gruppe 10 entspricht, mit dem Anschluss B1 der ersten Gruppe 10 verbunden sind. Analog sind bei der ersten Drehrichtung des ersten Radialkolbenmotors 1 Mündungskanäle, deren Verteilung derjenigen der Arbeitsflanken der zweiten Gruppe 12 entspricht, mit einem Anschluss A2 der zweiten Gruppe 12 verbunden, während Mündungsbohrungen, deren Verteilung derjenigen der Rückführflanken der zweiten Gruppe 12 entspricht, mit dem Anschluss B2 der zweiten Gruppe 12 verbunden sind.

Weiterhin sind im Gehäuse 8 des ersten Radialkolbenmotors 1 ein Gangwahlventil 14 und ein Absperrventil 16 vorgesehen. Das Gangwahlventil 14 ist als 5/2-Wegeventil ausgebildet. Es ist direkt mit den beiden Anschlüssen A2, B2 der zweiten Gruppe 12 und weiterhin mit den beiden Hauptanschlüssen A, B des Antriebs verbunden. Schließlich hat das Gangwahlventil 14 einen Steuerdruckanschluss X₁₄. In einer ersten Stellung a des Ventilschiebers 18 des Gangwahlventils 14 ist der erste Hauptanschluss A des Antriebs mit dem ersten Anschluss A2 der ersten Gruppe 12, verbunden während der zweite Hauptanschluss B des Antriebs mit dem zweiten Anschluss B2 der zweiten Gruppe 12 verbunden ist. Der Steuerdruckanschluss X₁₄ des Gangwahlventils 14 ist dabei abgesperrt. In einer zweiten Stellung b des Ventilschiebers 18 sind die beiden Anschlüsse A2, B2 der zweiten Gruppe 12 miteinander und weiterhin mit dem Steuerdruckanschluss X₁₄ verbunden.

An dem Gehäuse 8 ist ein Steuerdruckanschluss X₁ vorgesehen, der über eine Steuerdruckleitung 20 und über eine Steuerdruck-Zweigleitung 22 mit einem Steuerdruckraum 23 verbunden ist, über den der Ventilschieber 18 des Gangwahlventils 14 gegen die Kraft einer Feder 24 von der ersten Stellung a zur zweiten Stellung b verschoben werden kann. Weiterhin verzweigt die Steuerdruckleitung 20 in eine weitere Steuerdruck-Zweigleitung 26, über die der Steuerdruckanschluss X₁ des Gehäuses 8 mit dem Steuerdruckanschluss X₁₄ des Gangwahlventils 14 verbindbar ist.

In der Steuerdruck-Zweigleitung 26 ist das Absperrventil 16 vorgesehen, dessen Ventilkörper in einer durch eine Feder 28 vorgespannten Grundstellung den Steuerdruckanschluss X₁ des Gehäuses 8 gegen den Steuerdruckanschluss X₁₄ des Gangwahlventils 14 absperrt. Das Absperrventil 16 öffnet, wenn der Steuerdruck die Kraft der Feder 28 überwiegt.

Der Hauptanschluss A des Antriebs ist über eine verzweigte Hauptleitung 30 einerseits mit dem Anschluss A1 der ersten Gruppe 10 und andererseits in der durch die Feder 24 vorgespannten ersten Stellung a des Ventilschiebers 18 des Gangwahlventils 14 mit dem Anschluss A2 der zweiten Gruppe 12 verbunden. Der andere Anschluss B1 der ersten Gruppe 10 ist über eine Verbindungsleitung 32 und über den zweiten Radialkolbenmotor 4 mit dem anderen Hauptanschluss B des Antriebs verbunden. Der andere Anschluss B2 der zweiten Gruppe 12 ist in der durch die Feder 24 vorgespannten Stellung a des Ventilschiebers 18 des Gangwahlventils 14 mit dem anderen Hauptanschluss B des Antriebs verbunden.

Figur 2 zeigt in einem Längsschnitt einen Teil des Gehäuses 8 des ersten Radialkolbenmotors 1 und einen Ausschnitt eines darin rotierbar aufgenommenen Rotors 2, der einstückig mit der (in Figur 1 gezeigten) Abtriebswelle 2 gebildet ist oder drehfest an diese gekoppelt ist. Der Rotor 2 rotiert dabei um seine Längsachse 34.

Am Außenumfang des Rotors 2 sind ringförmig umlaufende Druckräume 36, 38, 40, 42 angeordnet, die einerseits durch Vertiefungen am Außenumfang des Rotors 2 und andererseits durch Vertiefungen an einem Innenumfang des Gehäuses 8 gebildet sind. Am Außenumfang dieser Druckräume 36, 38, 40, 42 ist eine Ventilbohrung 44 des Gangwahlventils 14 im Gehäuse 8 gebildet. Der Druckraum 36, der den Anschluss B1 der ersten Gruppe 10 bildet, hat keine Verbindung zu dieser Ventilbohrung 44. Der daneben angeordnete Druckraum 38, der den Anschluss B2 der zweiten Gruppe 12 bildet, und der daneben angeordnete Druckraum 40, der den Anschluss A2 der zweiten Gruppe 12 bildet, und der daneben angeordnete Druckraum 42, der mit dem ersten Hauptanschluss A des Antriebs verbunden ist, sind jeweils über einen radial (nicht in der Zeichenebene geschnittenen) Kanal mit einem jeweiligen am Innenumfang der Ventilbohrung 44 angeordneten umlaufenden Druckraum des Gangwahlventils 14 verbunden.

In Figur 2 ist weiterhin der Ventilschieber 18 des Gangwahlventils 14 in seiner ersten Stellung a gezeigt, in dieser Stellung ist über einen ersten Hals 46 der Druckraum 40 des Anschlusses A2 der zweiten Gruppe 12 mit dem Druckraum 42 des ersten Hauptanschlusses A des Antriebs verbunden, während gleichzeitig über einen zweiten Hals 48 der Druckraum 38 des Anschlusses B2 der zweiten Gruppe 12 mit dem zweiten Hauptanschluss B des Antriebs verbunden ist. Der zweite Hauptanschluss B ist durch eine von der Ventilbohrung 44 radial nach außen geführte Bohrung gebildet.

Stirnseitig am Ventilschieber 18 ist der Steuerdruckraum 23 angeordnet, der bei der in Figur 2 gezeigten ersten Stellung a des Ventilschiebers 18 minimale Größe aufweist. Bei Beaufschlagung mit Steuerdruckmittel wird der Ventilschieber 18 (in Figur 2 nach rechts) verschoben, so dass die beiden Hauptanschlüsse A, B abgesperrt sind, während über den zweiten Hals 48 die beiden innen liegenden Druckräume 38, 40 der beiden Anschlüsse A2, B2 der zweiten Gruppe 12 miteinander verbunden werden.

Im Innern des Ventilschiebers 18 ist in einer Längsbohrung ein Schieber 50 geführt. Dieser dient dazu, in der in Figur 2 gezeigten ersten Stellung a des Ventilschieber 18 den zweiten Hals 48 gegen den Steuerdruckraum 23 abzusperren, und in der zweiten Stellung b des Ventilschiebers 18 den zweiten Hals 48 und damit die beiden Anschlüsse A2, B2 der zweiten Gruppe 12 erfindungsgemäß mit dem Steuerdruckraum 23 zu verbinden. Dazu sind am Innenumfang des zweiten Halses 48 mehrere Radialbohrungen 52 vorgesehen, die in der in Figur 2 gezeigten Stellung a des Ventilschiebers 18 von einem Bund des Schiebers 50 verschlossen sind. Bei Befüllung des Steuerdruckraums 23 mit Steuerdruckmittel werden der Ventilschieber 18 und darüber hinaus auch der Schieber 50 aus ihren in Figur 2 gezeigten Positionen nach rechts verschoben, wodurch der Steuerdruckraum 23 über die Radialbohrungen 52 und den zweiten Hals 48 mit den beiden Anschlüssen A2, B2 der zweiten Gruppe 12 erfindungsgemäß verbunden wird.

Offenbart ist ein hydraulischer Antrieb mit zwei Radialkolbenmotoren, die an Vorschubwalzen eines Harvesterkopfes drehfest gekoppelt sind, wobei ein Radialkolbenmotor nur ein Hubvolumen und der andere Radialkolbenmotor zwei Hubvolumina hat, zwischen denen umgeschaltet werden kann. Somit kann ein Baumstamm, der zwischen die Vorschubwalzen gespannt ist, in zwei Geschwindigkeiten bewegt werden. Bei der höheren Geschwindigkeit erfolgt in dem zweiten Hubvolumen des schaltbaren Radialkolbenmotors ein Druckmittel-Umlauf unter einem Steuerdruck.

### Bezugszeichenliste

- 1: erster Radialkolbenmotor
- 2: Abtriebswelle / Rotor
- 4: zweiter Radialkolbenmotor
- 6: Abtriebswelle
- 8: Gehäuse
- 10: erste Gruppe von Nocken
- 12: zweite Gruppe von Nocken
- 14: Gangwahlventil
- 16: Absperrventil
- 18: Ventilschieber
- 20: Steuerdruckleitung
- 22: Steuerdruck-Zweigleitung
- 23: Steuerdruckraum
- 24: Feder
- 26: Steuerdruck-Zweigleitung
- 28: Feder
- 30: Hauptleitung
- 32: Verbindungsleitung
- 34: Längsachse
- 36: Druckraum
- 38: Druckraum
- 40: Druckraum
- 42: Druckraum
- 44: Ventilbohrung
- 46: erster Hals
- 48: zweiten Hals
- 50: Schieber
- 52: Radialbohrung

- A: erster Hauptanschluss
- B: zweiter Hauptanschluss
- a: erste Stellung
- b: zweite Stellung
- A1, B1: Anschluss der ersten Gruppe
- A2, B2: Anschluss der zweiten Gruppe
- X₁₄: Steuerdruckanschluss des Gangwahlventils
- X₁: Steuerdruckanschluss des erstens Radialkolbenmotors

## Patentansprüche

1. Bidirektionaler hydraulischer Antrieb für die Vorschubwalzen eines Kopfes eines Holzvollernters mit einem ersten Radialkolbenmotor (1), der zwei Anschlüsse (A1, B1) aufweist, die mit einer ersten Gruppe (10) von Nocken in Wirkverbindung sind, und der zwei Anschlüsse (A2, B2) aufweist, die mit einer zweiten Gruppe (12) von Nocken in Wirkverbindung sind, wobei der Antrieb weiterhin einen zweiten Radialkolbenmotor (4) aufweist, **dadurch gekennzeichnet, dass** die zweite Gruppe (12) deaktivierbar ist, in dem ihre Anschlüsse (A2, B2) miteinander und gleichzeitig mit einer Steuerdruckleitung (20) oder mit einem Steuerdruckanschluss (X₁) verbindbar sind, wobei bei einer ersten Drehrichtung der Radialkolbenmotoren (1, 4) der zweite Radialkolbenmotor (4) stromab der ersten Gruppe (10) des ersten Radialkolbenmotos (1) angeordnet ist, und wobei bei einer zweiten Drehrichtung der Radialkolbenmotoren (1, 4) der zweite Radialkolbenmotor (4) stromauf der ersten Gruppe (10) des ersten Radialkolbenmotos (1) angeordnet ist.

2. Antrieb nach Anspruch 1, wobei die Nocken der beiden Gruppen (10, 12) an einem gemeinsamen Hubring verteilt sind, oder wobei die Nocken jeder Gruppe (10, 12) an einem jeweiligen Hubring ausgebildet sind, die zueinander axial beabstandet sind.

3. Antrieb nach einem der vorhergehenden Ansprüche mit einem Gangwahlventil (14), das in einer ersten Stellung (a) seines Ventilschiebers (18) die zweite Gruppe (12) aktiviert, in dem ihre beiden Anschlüsse (A2, B2) mit einem jeweiligen Hauptanschluss (A, B) des Antriebs verbunden ist, und das in einer zweiten Stellung (b) seines Ventilschiebers (18) die zweite Gruppe (12) deaktiviert, in dem ihre beiden Anschlüsse (A2, B2) miteinander und mit der Steuerdruckleitung (20) oder dem Steuerdruckanschluss (X₁) verbunden sind.

4. Antrieb nach Anspruch 3, wobei das Gangwahlventil (14) ein 5/2-Wegeventil ist, und wobei der Ventilschieber (18) durch eine Feder (24) in die erste Stellung (a) vorgespannt ist und mittels eines Steuerdrucks des Steuerdruckanschlusses (X₁) in die zweite Stellung (b) bewegbar ist.

5. Antrieb nach Anspruch 4, wobei die Steuerdruckleitung (20) oder der Steuerdruckanschluss (X₁) über eine Steuerdruck-Zweigleitung (22) mit einem gegen die Feder (24) wirkenden Steuerdruckraum (23) des Gangwahlventils (14) verbunden und über eine weitere Steuerdruck-Zweigleitung (26) mit einem Steuerdruckanschluss (X₁₄) des Gangwahlventils (14) verbindbar ist, der in der zweiten Stellung (b) des Ventilschiebers (18) mit den beiden Anschlüssen (A2, B2) der zweiten Gruppe (12) verbunden ist.

6. Antrieb nach Anspruch 5, wobei in der weiteren Steuerdruck-Zweigleitung (26) ein Absperrventil (16) angeordnet ist.

7. Antrieb nach Anspruch 6, wobei das Absperrventil (16) in einer durch eine Feder (28) vorgespannten Stellung den Steuerdruckanschluss (X₁₄) des Gangwahlventils (14) gegen die Steuerdruckleitung (20) oder den Steuerdruckanschluss (X₁) absperrt, und in einer durch den Steuerdruck erzeugbaren Stellung den Steuerdruckanschluss (X₁₄) des Gangwahlventils (14) mit der Steuerdruckleitung (20) oder dem Steuerdruckanschluss (X₁) verbindet.

8. Antrieb einem der Ansprüche 3 bis 7, wobei der Ventilschieber (18) des Gangwahlventils (14) stetig verstellbar ist.

9. Antrieb nach einem der vorhergehenden Ansprüche, wobei der erste Radialkolbenmotor (1) einen Rotor (2) hat, an dessen Außenumfang ein ruhendes Gehäuse (8) vorgesehen ist, wobei ein erster Hauptanschluss (A) des Antriebs und die beiden Anschlüsse (A2, B2) der zweiten Gruppe (12) mit einem jeweiligen zwischen dem Rotor (2) und dem Gehäuse (8) gebildeten umlaufenden Druckraum (38, 40, 42) verbunden sind.

10. Antrieb nach einem der Ansprüche 3 bis 8 und nach Anspruch 9, wobei das Gangwahlventil (14) in dem Gehäuse (8) vorzugsweise am Außenumfang der umlaufenden Druckräume (36, 38, 40, 42) angeordnet ist.

11. Antrieb Anspruch 9 oder 10, wobei in der ersten Stellung (a) des Ventilschiebers (18) der umlaufende Druckraum (42) des ersten Hauptanschlusses (A) des Antriebs über einen Kanal und über einen ersten Hals (46) des Ventilschiebers (18) und über einen weiteren Kanal mit dem umlaufenden Druckraum (40) des ersten Anschlusses (A2) der zweiten Gruppe (12) verbunden ist, während der zweite Hauptanschluss (B) des Antriebs mit zumindest einem weiteren Kanal verbunden ist, der in der ersten Stellung (a) des Ventilschiebers (18) über einen zweiten Hals (48) des Ventilschiebers (18) und über einen weiteren Kanal mit dem umlaufenden Druckraum (38) des zweiten Anschlusses (B2) der zweiten Gruppe (12) verbunden ist.

12. Antrieb nach Anspruch 11, wobei in der zweiten Stellung (b) des Ventilschiebers (18) über seinen zweiten Hals (48) die umlaufenden Druckräume (38, 40) der beiden Anschlüsse (A2, B2) der zweiten Gruppe (12) miteinander verbunden sind.

13. Antrieb nach Anspruch 11 oder 12, wobei in dem Ventilschieber (18) im Bereich seines zweiten Halses (48) zumindest eine Radialbohrung (52) vorgesehen ist, über die ein Steuerdruckraum (23) mit dem zweiten Hals (48) verbindbar ist.

14. Antrieb nach Anspruch 13, wobei die zumindest eine Radialbohrung (52) über einen im Innern des Ventilschiebers (18) aufgenommenen Schieber (50) aufsteuerbar ist, wenn in dem Steuerdruckraum (23) der Steuerdruck herrscht, und wobei die zumindest eine Radialbohrung (52) über den Schieber (50) zusteuerbar ist, wenn in dem Steuerdruckraum (23) ein Druck herrscht, der geringer als der Steuerdruck ist.

## Claims

1. Bidirectional hydraulic drive for the feed rollers of a head of a complete timber harvester, having a first radial piston motor (1), which has two ports (A1, B1) which are in operative connection with a first group (10) of cams, and which has two ports (A2, B2) which are in operative connection with a second group (12) of cams, wherein the drive furthermore has a second radial piston motor (4), **characterized in that** the second group (12) can be deactivated by the ports (A2, B2) of said group being connectable to one another and simultaneously to a control pressure line (20) or to a control pressure port (X₁), wherein, in a first direction of rotation of the radial piston motors (1, 4), the second radial piston motor (4) is arranged downstream of the first group (10) of the first radial piston motor (1), and wherein, in a second direction of rotation of the radial piston motors (1, 4), the second radial piston motor (4) is arranged upstream of the first group (10) of the first radial piston motor (1).

2. Drive according to Claim 1 wherein the cams of the two groups (10, 12) are distributed on a common cam ring, or wherein the cams of each group (10, 12) are formed on a respective cam ring, said cam rings being axially spaced apart from one another.

3. Drive according to one of the preceding claims having a speed selector valve (14), which, in a first position (a) of the valve spool (18) of said valve, activates the second group (12) by connecting the two ports (A2, B2) of said group to a respective main port (A, B) of the drive, and which, in a second position (b) of the valve spool (18) of said valve, deactivates the second group (12) by connecting the two ports (A2, B2) of said group to one another and to the control pressure line (20) or to the control pressure port (X₁).

4. Drive according to Claim 3, wherein the speed selector valve (14) is a 5/2-way valve, and wherein the valve spool (18) is preloaded into the first position (a) by a spring (24) and can be moved into the second position (b) by means of a control pressure of the control pressure port (X₁).

5. Drive according to Claim 4, wherein the control pressure line (20) or the control pressure port (X₁) is connected via a control pressure branch line (22) to a control pressure space (23) of the speed selector valve (14), said control pressure space acting counter to the spring (24), and can be connected via a further control pressure branch line (26) to a control pressure port (X₁₄) of the speed selector valve (14), which is connected in the second position (b) of the valve spool (18) to the two ports (A2, B2) of the second group (12).

6. Drive according to Claim 5, wherein a shut-off valve (16) is arranged in the further control pressure branch line (26).

7. Drive according to Claim 6, wherein the shut-off valve (16) shuts off the control pressure port (X₁₄) of the speed selector valve (14) from the control pressure line (20) or the control pressure port (X₁) in a position preloaded by a spring (28), and connects the control pressure port (X₁₄) of the speed selector valve (14) to the control pressure line (20) or the control pressure port (X₁) in a position that can be produced by the control pressure.

8. Drive according to one of Claims 3 to 7, wherein the valve spool (18) of the speed selector valve (14) is continuously adjustable.

9. Drive according to one of the preceding claims, wherein the first radial piston motor (1) has a rotor (2), on the outer circumference of which a stationary housing (8) is provided, wherein a first main port (A) of the drive and the two ports (A2, B2) of the second group (12) are connected to a respective encircling pressure space (38, 40, 42) formed between the rotor (2) and the housing (8).

10. Drive according to one of Claims 3 to 8 and according to Claim 9, wherein the speed selector valve (14) is arranged in the housing (8), preferably on the outer circumference of the encircling pressure spaces (36, 38, 40, 42) .

11. Drive according to Claim 9 or 10, wherein, in the first position (a) of the valve spool (18), the encircling pressure space (42) of the first main port (A) of the drive is connected via a passage and via a first neck (46) of the valve spool (18) and via a further passage to the encircling pressure space (40) of the first port (A2) of the second group (12), while the second main port (B) of the drive is connected to at least one further passage, which, in the first position (a) of the valve spool (18), is connected via a second neck (48) of the valve spool (18) and via a further passage to the encircling pressure space (38) of the second port (B2) of the second group (12).

12. Drive according to Claim 11, wherein, in the second position (b) of the valve spool (18), the encircling pressure spaces (38, 40) of the two ports (A2, B2) of the second group (12) are connected to one another via the second neck (48) of said valve spool.

13. Drive according to Claim 11 or 12, wherein at least one radial bore (52), via which a control pressure space (23) can be connected to the second neck (48), is provided in the valve spool (18) in the region of the second neck (48) thereof.

14. Drive according to Claim 13, wherein the at least one radial bore (52) can be opened by means of a spool (50) accommodated in the interior of the valve spool (18) when the control pressure prevails in the control pressure space (23), and wherein the at least one radial bore (52) can be closed by means of the spool (50) when the pressure prevailing in the control pressure space (23) is lower than the control pressure.

## Revendications

1. Mécanisme d'entraînement hydraulique bidirectionnel pour les rouleaux d'avance d'une tête d'une abatteuse forestière, comprenant un premier moteur à piston radial (1), qui possède deux raccords (A1, B1) qui sont en liaison active avec un premier groupe (10) de cames, et qui possède deux raccords (A2, B2) qui sont en liaison active avec un deuxième groupe (12) de cames, le mécanisme d'entraînement possédant en outre un deuxième moteur à piston radial (4), **caractérisé en ce que** le deuxième groupe (12) peut être désactivé du fait que ses raccords (A2, B2) peuvent être reliés entre eux et en même temps à une conduite de pression de commande (20) ou à un raccord de pression de commande (X₁), avec un premier sens de rotation des moteurs à piston radial (1, 4), le deuxième moteur à piston radial (4) se trouvant en aval du premier groupe (10) du premier moteur à piston radial (1), et avec un deuxième sens de rotation des moteurs à piston radial (1, 4), le deuxième moteur à piston radial (4) se trouvant en amont du premier groupe (10) du premier moteur à piston radial (1).

2. Mécanisme d'entraînement selon la revendication 1, les cames des deux groupes (10, 12) étant réparties sur un anneau de levage commun, ou les cames de chaque groupe (10, 12) étant formées au niveau d'un anneau de levage respectif anneaux de levage qui sont espacés l'un de l'autre dans le sens axial.

3. Mécanisme d'entraînement selon l'une des revendications précédentes, comprenant une vanne de sélection de rapport (14) dont le tiroir de vanne (18), dans une première position (a), active le deuxième groupe (12) du fait que ses deux raccords (A2, B2) sont reliés à un raccord principal (A, B) respectif du mécanisme d'entraînement, et dont le tiroir de vanne (18), dans une deuxième position (b), désactive le deuxième groupe (12) du fait que ses deux raccords (A2, B2) sont reliés l'un à l'autre et à la conduite de pression de commande (20) ou au raccord de pression de commande (X₁).

4. Mécanisme d'entraînement selon la revendication 3, la vanne de sélection de rapport (14) étant un distributeur 5/2 et le tiroir de vanne (18) étant précontraint par un ressort (24) dans la première position (a) et pouvant être déplacé dans la deuxième position (b) au moyen d'une pression de commande du raccord de pression de commande (X₁).

5. Mécanisme d'entraînement selon la revendication 4, la conduite de pression de commande (20) ou le raccord de pression de commande (X₁) étant relié par le biais d'une conduite dérivée de pression de commande (22) à un espace de pression de commande (23) de la vanne de sélection de rapport (14), qui agit contre le ressort (24), et pouvant être relié par le biais d'une conduite dérivée de pression de commande (26) supplémentaire à un raccord de pression de commande (X₁₄) de la vanne de sélection de rapport (14) qui, dans la deuxième position (b) du tiroir de vanne (18), est reliée aux deux raccords (A2, B2) du deuxième groupe (12).

6. Mécanisme d'entraînement selon la revendication 5, une vanne d'arrêt (16) étant disposée dans la conduite dérivée de pression de commande (26) supplémentaire.

7. Mécanisme d'entraînement selon la revendication 6, la vanne d'arrêt (16), dans une position précontrainte par un ressort (28), fermant le raccord de pression de commande (X₁₄) de la vanne de sélection de rapport (14) par rapport à la conduite de pression de commande (20) ou au raccord de pression de commande (X₁) et, dans une position pouvant être produite par la pression de commande, reliant le raccord de pression de commande (X₁₄) de la vanne de sélection de rapport (14) à la conduite de pression de commande (20) ou au raccord de pression de commande (X₁).

8. Mécanisme d'entraînement selon l'une des revendications 3 à 7, le tiroir de vanne (18) de la vanne de sélection de rapport (14) pouvant être positionné en continu.

9. Mécanisme d'entraînement selon l'une des revendications précédentes, le premier moteur à piston radial (1) comprenant un rotor (2) au niveau du pourtour extérieur duquel se trouve un carter (8) rond, un premier raccord principal (A) du mécanisme d'entraînement et les deux raccords (A2, B2) du deuxième groupe (12) étant reliés à un espace de pression (38, 40, 42) respectif circonférentiel formé entre le rotor (2) et le carter (8) .

10. Mécanisme d'entraînement selon l'une des revendications 3 à 8 et selon la revendication 9, la vanne de sélection de rapport (14) étant disposée dans le carter (8), de préférence au niveau du pourtour extérieur des espaces de pression (36, 38, 40, 42) circonférentiels.

11. Mécanisme d'entraînement selon la revendication 9 ou 10, dans la première position (a) du tiroir de vanne (18), l'espace de pression (42) circonférentiel du premier raccord principal (A) du mécanisme d'entraînement étant relié par le biais d'un canal et par le biais d'un premier col (46) du tiroir de vanne (18) et par le biais d'un deuxième canal à l'espace de pression (40) circonférentiel du premier raccord (A2) du deuxième groupe (12), alors que le deuxième raccord principal (B) du mécanisme d'entraînement est relié à au moins un canal supplémentaire qui, dans la première position (a) du tiroir de vanne (18), est relié par le biais d'un deuxième col (48) du tiroir de vanne (18) et par le biais d'un canal supplémentaire à l'espace de pression (38) circonférentiel du deuxième raccord (B2) du deuxième groupe (12).

12. Mécanisme d'entraînement selon la revendication 11, les espaces de pression (38, 40) circonférentiels des deux raccords (A2, B2) du deuxième groupe (12) étant reliés l'un à l'autre dans la deuxième position (b) du tiroir de vanne (18) par le biais de son deuxième col (48).

13. Mécanisme d'entraînement selon la revendication 11 ou 12, au moins un alésage radial (52) se trouvant dans le tiroir de vanne (18) dans la zone de son deuxième col (48), par le biais duquel un espace de pression de commande (23) peut être relié au deuxième col (48) .

14. Mécanisme d'entraînement selon la revendication 13, l'au moins un alésage radial (52) pouvant être commandé en ouverture par le biais d'un coulisseau (50) accueilli à l'intérieur du tiroir de vanne (18) lorsque la pression de commande règne dans l'espace de pression de commande (23), et l'au moins un alésage radial (52) pouvant être commandé en fermeture par le biais du coulisseau (50) lorsque la pression qui règne dans l'espace de pression de commande (23) est inférieure à la pression de commande.
